(19) Europäisches Patentamt
European Patent Office
Office européen des brevets

(11) EP 1 260 355 A1

(12) EUROPEAN PATENT APPLICATION
published in accordance with Art. 158(3) EPC

(43) Date of publication:
**27.11.2002 Bulletin 2002/48**

(21) Application number: **01970220.8**

(22) Date of filing: **26.09.2001**

(51) Int Cl.[7]: **B32B 5/26**, D03D 11/00, D04B 21/14, A41D 31/00, A47C 27/12, A43B 1/00

(86) International application number:
**PCT/JP01/08377**

(87) International publication number:
**WO 02/028633 (11.04.2002 Gazette 2002/15)**

(84) Designated Contracting States:
**AT BE CH CY DE DK ES FI FR GB GR IE IT LI LU MC NL PT SE TR**

(30) Priority: **29.09.2000 JP 2000298989**
**10.11.2000 JP 2000342821**

(71) Applicant: **TORAY INDUSTRIES, INC.**
**Tokyo 103-8666 (JP)**

(72) Inventors:
- **ISHII, Masaki**
  **Kusatsu-shi, Shiga 525-0027 (JP)**
- **HARUTA, Masaru**
  **Otsu-shi, Shiga 520-0842 (JP)**
- **YOKOI, Hiroe**
  **Otsu-shi, Shiga 520-0026 (JP)**
- **SAITO, Koichi**
  **Kusatsu-shi, Shiga 525-0066 (JP)**
- **KAJI, Shuichi**
  **Joyo-shi, Kyoto 610-0121 (JP)**

(74) Representative: **Coleiro, Raymond et al**
**MEWBURN ELLIS**
**York House**
**23 Kingsway**
**London WC2B 6HP (GB)**

# (54) WARMTH RETAINING FIBER STRUCTURE

(57) The present invention relates to a heat-retaining fiber structure comprising a cloth layer having a moisture/heat release control capability laminated with a cloth layer having water molecule adsorption/heat release capability, wherein said cloth layer having the moisture/heat release control capability has a moisture permeability of 3000-12000g/$m^2$·24hr and said cloth layer having water molecule adsorption/heat release capability has an exothermic energy index of 5 or larger and a contact thermal sensation factor (qmax) of 0.1W/$cm^2$ or less.

This constitution makes it possible to provide clothing having high heat-retaining performance achieved by water molecule adsorption capability.

**Fig. 1**

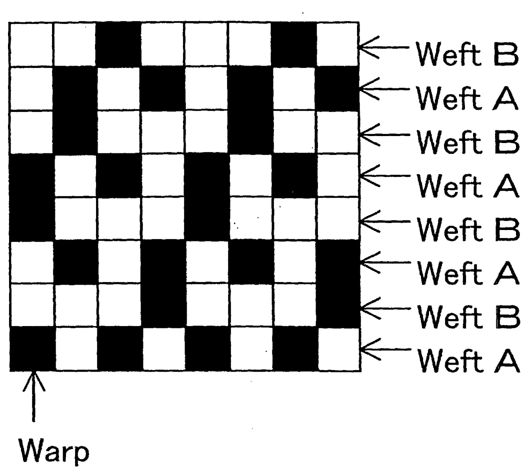


EP 1 260 355 A1

## Description

Technical Field of the Invention

The present invention relates to clothing, bedding, shoes and cloth used as parts thereof, which, having comfortable heat-retaining property, are suitably used as sports closings and cold protecting closings, heat-retaining bedding, cold protecting shoes, etc.

Background of the Invention

In conventional heat-retaining clothing, a raw material having an increased percentage of air content may be used to form an immovable air layer, or aluminum or the like may be used to reflect radiation heat, with the aim of improving its heat insulating property and heat-retaining property.

In recent years, moisture-sorption type hygroscopic-pyrogenic fibers as disclosed in JP-B-7-59762 have been used for improving heat-retaining property.

Various types of sportswear, underwear, lining, etc. that are characterized by improved heat-retaining property have been proposed as clothing for use in, primarily, sports applications in autumn and winder seasons . Though sportswear comprised mainly of synthetic fiber, used solely or mixed with natural fiber such as cotton and wool, shows superior heat-retaining property while the wearer stays still, only light exercise can give rise to a large increase in the temperature inside the wear to cause heavy sweating, leading to unpleasant feeling as the body wet with sweat cools after exercise. Besides, such wear does not have sufficient strength required for sportswear . Gigging of the back (facing the body) or both faces of fabric has been practiced widely, but such fabric is inferior as it can become clammy due to sweating.

To solve these problems, Japanese Utility Model Publication SHO 61-27900, for example, has proposed a woven knitted fabric that has a hydrophobic synthetic fiber layer on both the outside face and the inside face (skin-side face) with the single fiber fineness at one side being 1.5 times or more that at the other side to improve sweat absorbing property.

Japanese Utility Model Publication SHO 61-45180, for example, has proposed a circular-knitted, tubular plain stitch fabric consisting of a hydrophobic synthetic fiber layer on both the outside face and the inside face (skin-side face) with an uneven intermediate layer containing hydrophilic fiber to improve heat-retaining property and sweat absorbing property.

However, the sportswear according to Japanese Utility Model Publication SHO 61-27900 described above has no improvements intended for enhanced heat-retaining property, though superior in sweat absorbing property. The sportswear according to Japanese Utility Model Publication SHO 61-45180 suffers problems in that it is inferior in the touch because the skin-side face comprises an uneven, tubular plain stitch fabric, inferior in heat-retaining property, and bulky to impede the wearer's motion. Materials that reflect radiation heat tend to have a metallic color such as aluminum color, which limit the development of products of various colors, leading to the fact that fully satisfactory sportswear or underwear products have not yet been made available.

Improved clothing has been disclosed in Japanese Patent Publication HEI 7-59762, which uses moisture-sorption type hygroscopic-pyrogenic fibers. What are disclosed therein, however, only include heat-retaining goods that merely use moisture-sorption type hygroscopic-pyrogenic fibers, and clothing consisting of such fiber used as wadding or linings. Moisture-sorption type hygroscopic-pyrogenic fibers, however, are so high in moisture absorption coefficient that it has an unpleasant chilly feel to the hand or the body when touched.

When worn, moisture-sorption type hygroscopic-pyrogenic fiber releases heat as a result of moisture absorption/desorption and water absorption, while at the same time it is deprived of heat of vaporization as a result of release of water vapor into the air. Therefore, the quantity of heat that contributes to heat-retaining property is only that from the moisture sorption and water absorption minus the heat of vaporization. Fibers that release a larger quantity of heat as a result of moisture sorption and water absorption tend to suffer greater deprivation of heat of vaporization, leading to the problem that heat-retaining property cannot be improved significantly even if fibers are modified to release a larger quantity of heat due to moisture absorption/desorption and water absorption.

In view of such a situation, the object of the present invention is to provide heat-retaining fiber structures such as clothing and bedding that maximize the heat-retaining effect of water molecule adsorptive heat release while minimizing the chilly feel to the hand or the body when touched.

Disclosure if the invention

The inventors have earnestly devoted themselves to research and found that a cloth structure that efficiently performs water molecule adsorptive heat release while minimizing the chilly feel to the skin when touched can be

produced from cloth having water molecule adsorption/heat release capability laminated with cloth having moisture/heat release control capability for controlling the heat of vaporization.

Namely, to achieve the above-mentioned object, the invention adopts a heat-retaining structure comprising outer cloth having a moisture permeability of 300-12000g/$m^2$·24hr and lining having a exothermic energy index of 5 or more and a surface contact thermal sensation (q max) of 0.1W/$cm^2$ or less.

Brief description of the drawings

Fig.1 is a textural view of a weft double woven fabric as described in Example 4. The black squares show floating portions of warps. Weft A is a polyester false twist yarn of 83 dtex-72F and Weft B is a polyester false twist yarn of 165 dtex-96F.
Fig.2 is a knitting view of a knitted fabric as described in Example 6.

Description of the symbols

F1-F8: number of each yarn feed port of the knitting machine
D1-D5: dial-side knitting needles
C1-C6: cylinder-side knitting needles
a: component yarn on the reverse side of knitted fabric
b: component yarn on the surface side of knitted fabric

Fig.3 is a knitting view of knitted fabric as described in Example 7.

Description of the symbols

0-4: number of each interval between knitting needles of the knitting machine
c: a front-side component yarn
d: a backside component yarn

Fig.4 is an explanatory view of a load-stretch recovery curve. Fig.5 is a knitting view of knitted fabric as described in Example 8.

Description of the symbols

L1: the stretch of the knitted fabric
L2: the distortional stretch of the knitted fabric
L3: the recovered stretch of the knitted fabric
F1-F8: number of each yarn feed port of the knitting machine
D1-D5: dial-side knitting needles
C1-C6: cylinder-side knitting needles
a: component yarn on the reverse side of the knitted fabric
b: component yarn on the surface side of the knitted fabric

Best mode for carrying out the invention

Cloth for the cloth layer having moisture/heat release control capability and cloth for the cloth layer having water molecule adsorption capability to be used for the invention may be selected properly depending on intended applications. but useful ones include, but not limited to, woven fabrics, knitted fabrics and nonwoven fabrics produced from synthetic fibers such as nylon fibers, polyester fibers and polyamide fibers, semi-synthetic fibers such as acetate fibers, and natural fibers such as cotton, hemp or wool, each of which may be used solely or together with others.

For the invention, said moisture/heat release control capability is intended to control the heat of vaporization. Said cloth layer having water molecule adsorption/heat release capability releases heat after adsorbing moisture released from the wearer's body through insensible perspiration, but at the same time evaporates moisture from the cloth to the outside environment while absorbing the heat of vaporization, thus causing a decrease in the net pyrogenic effect for the wearer. A pyrogenic effect that is sensible to the wearer is achieved only by controlling the heat of vaporization.

However, if said control works to limit the quantity of heat of vaporization to a low level, the moisture release performance will deteriorate, causing increased stuffiness to make the wearer feel unpleasant. To prevent the generation of heat of vaporization while eliminating the stuffiness for the wearer, the moisture permeability of the cloth layer having moisture/heat release control capability should be within 3000-12000 $g/m^2 \cdot 24hr$ as measured in accordance with JIS L-1099 (A-1). A lower moisture permeability brings about an increased stuffiness, whereas a higher moisture permeability brings about a larger quantity of heat of vaporization and a decreased water molecule adsorption/heat release performance, making the heat release effect unperceivable.

It has been well known since early times that cloth having water molecule adsorption/heat release capability, consisting of hygroscopic fiber, adsorbs water molecules to release heat as described, for example, on p.245 of The Fiber Handbook (raw material), issued by Maruzen Co., Ltd. Such fiber may be used for the invention as the cloth layer having water molecule adsorption/heat release capability, but more practically desirable ones include synthetic fiber in which a hygroscopic polymer or the like is dispersed to increase hygroscopicity, such as highly hygroscopic nylon yarns produced by spinning nylon after incorporating polyvinyl pyrrolidone, and fibers with enhanced water molecule adsorption/heat release capability produced by fixing, in an after processing process etc., a hygroscopic polymer and/or hygroscopic particulates on the surface to improve hygroscopic performance.

It is more desirable that cloth with further enhanced water molecule adsorption/heat release capability produced by fixing, in an after processing step etc., a hygroscopic polymer and/or hygroscopic particulates on the surface of the fiber is used as said highly hygroscopic synthetic fiber.

An increase in hygroscopic performance gives rise to a chilly feel to the hand or the body when touched, resulting in inadequacy for heat-retaining clothing. To prevent such a phenomenon, the invention requires the skin-contact side of said cloth layer having water molecule adsorption/heat release capability to have a contact thermal sensation factor (qmax) of 0.1 $W/cm^2$ or less.

A contact thermal sensation factor (qmax) of 0.1W $/cm^2$ or less can be achieved by, for example, providing the contact side with a rough texture to form a cloth structure having a smaller contact area, Such a small factor can also be achieved with double weave in which only the contact side comprises less hygroscopic fiber. In another example, a contact thermal sensation factor (qmax) of 0.1$W/cm^2$ or less can be achieved by using gigged or double weave to decrease the contact area. For the present invention, however, any method may be used, without being limited by the above examples, if it can achieve a contact thermal sensation factor (qmax) of 0.1$w/cm^2$ or less.

The exothermic energy index as used for the invention is defined as the water molecule adsorption/heat release energy compared with that of a 100% polyester material, namely, the ratio relative to the value of a 100% polyester material. A practical measuring method is detailed in Examples, where a 3g specimen is put around an alcohol thermometer, conditioned in an environment of a temperature of 30°C and humidity of 30%RH, and then transferred to an environment with a of 30°C and 90%RH, and the changes in temperature which rises as the specimen absorbs moisture are measured, followed by plotting the measurements on a graph, with time and temperature as the horizontal and vertical axes, respectively, for the time period in which the temperature goes up from 30°C and finally falls down to 30°C, in order to determine the area.

For said cloth layer having moisture molecule adsorption/heat release capability to be used for the invention, the above exothermic energy index should be 5 or larger. The exothermic energy index is preferably 8 or larger, more preferably 10 or larger. If it is less than 5, a sufficient heat release effect cannot be realized.

A moisture permeable, waterproof product laminated with a synthetic resin coat layer to be used for the invention may comprise a polyurethane microporous coat produced by wet coagulation, a hydrophilic polyurethane nonporous coat, or a microporous polytetrafluoroethylene coat. A cloth having a pyrogenic energy of 5 or larger and a contact thermal sensation factor (qmax) of 0.1$W/cm^2$ or less, as described above, maybe laminated by adhesion etc. on the coated surface of the product to produce moisture permeable, waterproof clothing having water molecule adsorption/heat release capability.

Double woven fabric is often used to provide a water molecule adsorption/heat release cloth layer and a moisture/heat release control cloth layer in one sheet of fabric. Double woven fabric consists of two different woven fabrics combined together into one sheet of woven fabric. Such double fabric is doubled using either warps or wefts, or both. Although any of these methods is acceptable, doubled fabric of this invention should have a dense outer surface and a coarse reverse surface. In such a structure with a dense outer surface and a coarse reverse surface, the cover factor of the outer surface weave is higher than that of the reverse surface weave. Such structure with a dense outer surface can have a moisture permeability of 3000-12000$g/m^2 \cdot 24hr$ and serves as a moisture/heat release

control layer. Water molecule adsorption/heat release capability can be imparted to the coarse reverse surface by incorporating a highly hygroscopic fiber, such as a nylon yarn or the like with improved hygroscopic performance produced by incorporating polyvinyl pyrrolidone into the above-mentioned nylon followed by spinning, into the yarn to be used in the reverse surface, or by fixing a hygroscopic polymer or hygroscopic particulates to the reverse surface alone in an after processing step etc. designed for kiss-roll processing, foaming, etc. A simpler procedure is to immerse the above double woven fabric in a solution of an agent with water molecule adsorption/ heat release capability by the padding method, as such an agent tends to deposited onto the coarse reverse surface more easily than onto the dense outer surface, resulting in deposition of a larger amount of the agent on the yarn forming the reverse surface weave than on that forming the outer surface weave to achieve the intended capability.

Further, the use of a coarse reverse surface permits the contact thermal sensation factor (qmax) to be 0.1W/cm$^2$ or less.

A heat retaining fiber structure having water molecule adsorption/heat release capability can be produced by sewing the above double woven fabric.

For knitted fabrics for sportswear, underwear, lining or supporters, water molecule adsorption/heat release capability can be enhanced by increasing their hygroscopic performance, but a mere increase in the water molecule adsorption/heat release capability gives rise to a chilly feel to the skin when touched, making the fabrics unsuitable for intended heat-retaining applications. To avoid this contradiction, the skin contact side of said knitted fabrics having water molecule adsorption/heat release capability to be used for the invention should have a contact thermal sensation factor (qmax) of 0.12W/cm$^2$ or less.

Knitted fabrics having a contact thermal sensation factor (qmax) of 0.12W/cm$^2$ or less can be produced by providing rough texture to the skin contact side to the extent that good touch to the skin doe not deteriorate to form a knitted structure with a decreased contact area. Knitted fabrics having a contact thermal sensation factor (qmax) of 0 . 12W/cm$^2$ or less can also be produced by using a multi-woven fabric structure such as a double woven fabric structure comprising low-hygroscopic fiber only in the skin contact side. Useful techniques for achieving a contact thermal sensation factor (qmax) of 0.12W/cm$^2$ or less include, but not limited to, gigging of either side of knitted fabrics and decreasing of the contact area in multi-woven fabrics, but any other technique may be used if it can achieve a contact thermal sensation factor (qmax) of 0.12W/cm$^2$ or less.

The contact thermal sensation factor (qmax) is preferably 0.1W/cm$^2$ or less, more preferably 0.08W/cm$^2$ or less.

The skin contact side of sportswear of this invention must have a water drop adsorption time of five seconds or shorter. A water drop adsorption time of five seconds or shorter can be achieved by fixing a hygroscopic polymer and/or hygroscopic particulates on the surfaces of fibers constituting the knitted fabric described above to increase the water absorbing performance of the knitted fabric. If the water drop adsorption time is longer than five seconds, sweat-absorbing performance during exercise will deteriorate to cause stuffiness, making the sportswear uncomfortable.

The water drop adsorption time is preferably three seconds or shorter, more preferably one and half seconds or shorter.

Sportswear of this invention must comprise knitted fabric that has a bursting strength of 0.29MPa or more. If the bursting strength is less than 0.20MPa, breakage may take place during use.

It is desirable that the knitted fabric of sportswear of this invention has a density of 22-82 wales/2.54cm and 24-130 courses/2.54cm, and a weight of 80-330g/cm$^2$.

With a density of 22-82 wales/2.54cm or more and 24-130 courses/2.54cm or more, a required strength is maintained, stitch slippage prevented, and knitting performance improved. Knitted fabrics with a density of 82 wales/2.54cm or less and 130 courses/2.54cm or less have comfortable texture, maintain light texture and have improved knitting performance.

Knitted fabrics with a weight of 80g/m2 or more have a proper tension and prevent stuffiness. On the other hand, a weight of 330g/m2 or less serves to prevents hard texture and maintains light texture.

Such knitted fabrics include warp-knitted ones such as tricot and raschel, and circular-knitted ones such as single circular knit and double circular knit. The knit weave may be half weave, back-half weave, queens cord weave, satin weave, meshed weave, or other derivative weaves of warp-knitted fabrics, or plain weave, circular rib weave, interlock weave, reversible weave or other derivative weaves of circular knitted fabrics, or any other weave used in ordinary sportswear.

In particular, rough surface provided on the reverse side (skin contact side) of knitted fabric to the extent that the surface does not lose comfortable touch works to decrease the area of contact of the skin with the reverse side of underwear while forming an immovable air layer to reduce the contact thermal sensation factor (qmax) of the skin contact side and also to prevent heavy stuffiness from being caused by sweating, achieving a favorable configuration.

Such rough texture may be formed by adopting derivative weave, a combination of thick and thin yarns, jacquard weave, gigging, or embossing.

Knitted fabric for sportswear of this invention may comprise any of said weaves as a single layer or may be

in a multilayered structure having two or three layers. If knitted fabric of a multilayered structure is used, it is desirable that spun yarns are used to produce the outer surface of the knitted fabric while using synthetic multifilament yarns in the reverse side (skin contact side), or that synthetic multifilament yarns with a small single fiber fineness are used to produce the outer surface side of the knitted fabric while using synthetic multifilament yarns with a large single fiber fineness in the reverse side (skin contact side). In addition, it is more desirable that the single fiber fineness of yarns constituting the outer surface side is 1.5 times or more that of yarns constituting the reverse side. It is still more desirable that a highly modified-section synthetic multifilament yarn with a cross-section in a H, I, W, X, Y or + form and having a plurality of grooves in the surfaces of synthetic multifilament yarns in the length direction of single fibers are used as the yarn that constitutes the outer surface side while using an ordinary-section synthetic multifilament yarn with a circular or triangular cross section as the yarn constituting the reverse side.

Knitted fabric of such a multilayered structure permits not only sweat vapor but also liquid sweat to be quickly and efficiently absorbed, permeated and dispersed from the reverse side (skin contact side) to the outer surface side of the knitted fabric due to a capillary phenomenon caused by the multilayered structure having two or three layers, allowing the fabric to serve as comfortable sportswear for wearers who perform hard exercise that causes heavy liquid sweating.

Such knitted fabric for sportswear may contain rubber elastic yarns such as polyurethane based elastic yarns . Such rubber elastic yarns are preferably applied to sportswear such as athletic underwear half pants, cycling pants, leotards, speed skating wear, and athletic skiing wear that require better stretching performance, as their stretching capability permits the wear to fit well to the body, enhances easy body movement, and improves the body line.

Preferable polyester yarns other than polyurethane elastic yarns include those comprising polytrimethylene terephthalate as the major component, and in particular, costs can be reduced by using multifilament yarns consisting of polytrimethylene terephthalate and polyethylene terephthalate adhered side by side to each other.

According to the present invention, a wide variety of sportswear products can be developed by selecting proper materials and fabric structures, such as running shirts and pants, athletic shirts and pants, golf shirts, tennis shirts, cycling shirts and pants, outdoor shirts, polo shirts, T-shirts, baseball undershirts, training wear, baseball uniform shirts and pants, skiing wear, leotards, athletic underwear half pants, and speed skating wear.

Underwear according to the invention should comprise knitted fabric with a flex rigidity of 5-30mm as measured by the cantilever method. If the flex rigidity is 300mm or more, the knitted fabric will have hard texture, making the fabric unsuitable for underwear. If it is less than 5mm, the knitted fabric will have excessively soft texture to allow the fabric to cling to a body, inhibiting easy body movement.

Furthermore, underwear according to this invention should have comprised knitted fabric with a bursting strength of 0.25MPa or more. If the bursting strength is less than 0.25MP, breakage may take place while wearing.

A flex rigidity as described above can be achieved to some extent by using yarns with a proper thickness and knitted fabric with a proper weight, but it is essential to achieve a required flex rigidity is while maintaining a required bursting strength.

It is desirable that knitted fabric for underwear of this invention has a density of 22-85 wales/2.54cm and 24-138 courses/2.54cm, and a weight of 80-300g/m2.

A density of 22 wales/2.54cm or more and a 24 courses/2.54cm or more, achieved at the same time, serves to maintain a required strength while preventing stitch slippage to improve the knitting performance. On the other hand, a density of 85 wales/2.54cm or less and 138 courses/2.54cm or less, achieved at the same time, serves to enhance the feeling of the knitted fabric, maintain light texture, and improve the knitting performance.

Knitted fabric with a MESTSUKE of 80g/$m^2$ or more has a proper tension and prevents clinging to the body. On the other hand, a weight of 300g/$m^2$ or less prevents hard feeling and maintains light texture.

Such knitted fabrics include warp-knitted ones such as tricot and raschel, and circular-knitted ones such as single circular knit and double circular knit. The weave may be half weave, back-half weave, queens cord weave, satin weave, meshed weave, or a derivative weave of warp-knitted fabric, or plain weave, circular rib weave, interlock weave, mock lody weave, or a derivative weave of circular knitted fabric, or any other weave used in ordinary sportswear.

In particular, rough surface provided on the reverse side (skin contact side) of knitted fabric to the extent that the surface does not lose comfortable touch works to decrease the area of contact of the skin with the reverse side of underwear while forming an immovable air layer to reduce the contact thermal sensation factor (qmax) of the skin contact side, achieving a favorable configuration.

Such rough texture may be formed by adopting a derivative weave, a combination of thick and thin yarns, jacquard pattern weave, gigging, or embossing.

Knitted fabric for underwear of this invention may comprise any of said weaves as a single layer or may be in a multilayered structure having two or three layers. If knitted fabric of a multilayered structure is used, it is desirable that spun yarns are used to produce the outer surface of the knitted fabric while using synthetic multifilament yarns in the reverse side (skin contact side), or that synthetic multifilament yarns with a small single fiber fineness are used to produce the outer surface side of the knitted fabric while using synthetic multifilament yarns with a large single fiber

fineness in the reverse side (skin contact side).

According to the present invention, a wide variety of underwear products can be developed by selecting proper materials and fabric structures, such as general women's underwear products including slips, camisoles, petticoats, shirts, underpants, tights, T-shirts, turtleneck shirts, U-neck shirts, body suits, and girdles; men's underwear products including T-shirts, turtleneck shirts, running shirts, undershirts, tights, briefs, and trunks; sports-underwear products including those for athletic, outdoor or skiing applications as well as modifications of the former ones; and working underwear products including those for outdoor or cold reserving room operations.

Lining of this invention should comprise knitted fabric with a bursting strength of 0.2MPa or more. If the bursting strength is less than 0.2MPa, breakage may take place while wearing.

It is important that knitted fabric used as lining of this invention has a frictional static charge of 5kV or lower under the conditions of 20°C and 30%RH. Preferably, it is 3kV or lower. Frictional static electricity, which occurs when the lining comes in contact with the outer surface material, the skin, etc., has large influence on the wearing properties including clinging tendency. Properties as described above serve to prevent the clinging of closings, the deposition of dust and sparking discharge from being caused by static electricity which occurs frequently in dry circumstances in winter.

Knitted fabric used as lining of this invention preferably has a density of 24-85 wales/2.54cm and 28-130 courses/2.54cm, and a weight of 60-190g/$m^2$.

A density of 24 wales/2.54cm or more and a 28 courses/2.54cm or more, achieved at the same time, serves to maintain a required strength while preventing stitch slippage to improve the knitting performance. On the other hand, a density of 85 wales/2.54cm or less and 130 courses/2.54cm or less, achieved at the same time, serves to enhance the feeling of the knitted fabric, maintain light texture, and improve the knitting performance.

Knitted fabric with a MESTSUKE of 60g/$m^2$ or more has a proper tension and prevents clinging to the body. On the other hand, a weight of 190g/$m^2$ or less serves to prevent hard feeling while maintaining light texture

Such knitted fabrics include warp-knitted ones such as tricot and raschel, and circular-knitted ones such as single circular knit and double circular knit. The weave may be half weave, back-half weave, queens cord weave, satin weave, meshed weave, or a derivative weave of warp-knitted fabric, or plain weave, circular rib weave, interlock weave, or a derivative weave of circular knitted fabric, or any other weave used in ordinary lining.

In particular, rough surface provided on the reverse side (skin contact side) of knitted fabric to the extent that the surface does not lose comfortable touch works to decrease the area of contact of the skin with the lining while forming an immovable air layer to reduce the contact thermal sensation factor (qmax) of the skin contact side, achieving a favorable configuration.

Such rough texture may be formed by adopting a derivative weave, a combination of thick and thin yarns, jacquard pattern weave, gigging, or embossing.

Knitted fabric for lining of this in vent ion may comprise any of said weaves as a single layer or may be in a multilayered structure having two or three layers. If knitted fabric of a multilayered structure is used, it is desirable that synthetic multifilament yarns with a small single fiber fineness are used to produce the outer surface side of the knitted fabric while using synthetic multifilament yarns with a large single fiber fineness in the reverse side (skin contact side).

Knitted fabric of such a multilayered structure permits not only sweat vapor but also liquid sweat to be quickly and efficiently absorbed, permeated and dispersed from the reverse side (skin contact side) to the outer surface side of the knitted fabric due to a capillary phenomenon caused by the multilayered structure having two or three layers, allowing the fabric to serve as comfortable lining for wearers who perform hard exercise that causes heavy liquid sweating.

According to the present invention, a wide variety of lining products can be developed by selecting proper materials and fabric structures, such as sportswear, women' s wear, men's wear, child wear, formal wear, student wear, and working wear.

A supporter of this invention should comprise knitted fabric that has a stretchability of 50% or higher and a stretch recovery of 60% or higher in either weft or warp direction.

The stretchability represents the degree of stretch of the knitted fabric. A larger value permits easier adaptation of the supporter to the movement of the body, and quick stretch of the knitted fabric to follow body movements during hard exercise, allowing the wearer to move easily and suffer less exhaustion. The stretch recovery represents the degree of quick recovery of the knitted fabric to the former shape, after being elongated by the movement of the body. A larger value permits a higher degree of fitting to the body and easier movement for the wearer of the supporter.

The stretchability and the stretch recovery should be determined in either weft or warp direction of knitted fabric. If, for example, the fabric is to be used as material for a knee supporter or elbow supporter to be worn in actual applications, it is manufactured with the direction of the higher stretchability and higher stretch recovery aligned in the length direction of the supporter to allow them to closely follow the movements of the joint and with the direction of the lower stretchability and stretch recovery aligned in the lateral direction of the supporter to protect the muscle under a proper pressure. The directions should be vice versa in the case of a belly supporter.

The stretchability and the stretch recovery can be measured by a method described below. Specifically, the stretchability of knitted fabric is measured by the grab method under a constant stretch rate in accordance with JIS L 1018 "A Knitted Fabric Testing Method." Thus, three test pieces with a size of 10cm x about 15cm are sampled in both the weft and warp directions . A constant stretch rate tension tester with an automatic recorder is used. Grabs with a size of 2.54cm x 2.54 for the outer side and those with a size of 2.54cm x 5.08cm for the reverse side are set at both upper and lower positions, with 7.6 cm intervals between grabs, and a test piece is fixed to the grabs after removing sagging and tension. It is then elongated up to a load of 17.7N (1.8Kg) at a stress rate of 10 cm/min, and then the grab intervals are measured. Immediately after this, the load is removed and the test piece is allowed to recover to the original grab intervals of 7.6 cm. Behaviors under such loading-unloading operations are recorded as a load-stretch recovery curve on the recorder (see Fig.4).

Based on the results, the stretchability LA(%) is determined by the following expression, and the average for the three test pieces is calculated for both the weft and warp directions of the knitted fabric:

$$\text{stretchability } LA(\%)=[(L1-L)/L] \times 100,$$

where L is the grab interval (mm) and L1 is the grab interval (mm) when elongated up to 17.7N.

To calculate the stretch recovery LB(%) of the knitted fabric, the residual strain L2(%) is determined from the point where the load reaches zero in said load-stretch-recovery curve drawn by the recorder. The following formula is used to calculate the stretch recovery LB(%), and the average for the three test pieces is determined for both the weft and warp directions of the knitted fabric:

$$\text{stretch recovery } LB(\%)=(L3/L1) \times 100.$$

The bursting strength is measured in accordance with JIS L 1018 "A Knitted Fabric Testing method." Specifically, five test pieces having a size of 15cm x 15cm are sampled. Each test piece is set on a Mullen bursting strength tester with the outer surface up without applying tension, and the average for the five test pieces is calculated.

Knitted fabric of this invention should have a stretchability of 50% or higher, preferably 60% or higher, and 70% or higher, in either weft or warp direction.

If the stretchability is less than 50%, the supporter cannot be put on very easily, and cannot extend easily to follow the movements of the wearer, quickly exhausting the wearer. If the stretch recovery is less than 60%, the knitted fabric, once elongated by the movements of the wearer, cannot recover from the elongated condition. Thus supporter is inferior in fitting to the body and following the movements of the body. Such a supporter will also be inferior in appearance.

If the stretchability of fabric is larger in one direction while the stretch recovery is larger in the other, or vice versa, priority is preferably given to the direction of the higher stretchability.

Knitted fabric for the supporter of this invention should have a bursting strength of 0.29MPa or more. If the bursting strength is less than 0.29Mpa, breakage may take place during use.

Such knitted fabrics used in supporters of the invention include warp-knitted ones such as tricot and raschel; circular-knitted ones such as single circular knit and double circular knit; and those produced by a circular knitting machine for molding including single circular knit and double circular knit. The weave may be half weave, back-half weave, queens cord weave, satin weave, meshed weave, pile weave, or a derivative weave of warp-knitted fabric, or plain weave, circular rib weave, interlock weave, mock lody weave, or a derivative weave of circular knitted fabric, or any other weave used in ordinary supporters.

In particular, rough surface provided on the reverse side (skin contact side) of knitted fabric to the extent that the surface does not lose comfortable touch works to decrease the area of contact of the skin with the reverse side of the supporter while forming an immovable air layer to reduce the contact thermal sensation factor (qmax) of the skin contact side, achieving a favorable configuration.

Such rough texture may be formed by adopting a derivative weave, a combination of thick and thin yarns, jacquard pattern weave, pile weave, gigging, or embossing.

Knitted fabric for supporters of this invention may comprise any of said weaves as a single layer or may be in a multilayered structure having two or three layers. If knitted fabric of a multilayered structure is used, it is desirable that spun yarns are used to produce the outer surface of the knitted fabric while using synthetic multifilament yarns in the reverse side (skin contact side), or that synthetic multifilament yarns with a small single fiber fineness are used to produce the outer surface side of the knitted fabric while using synthetic multifilament yarns with a large single fiber fineness in the reverse side (skin contact side).

Knitted fabric of such a multilayered structure permits not only sweat vapor but also liquid sweat to be quickly

and efficiently absorbed, permeated and dispersed from the reverse side (skin contact side) to the outer surface side of the knitted fabric due to a capillary phenomenon caused by the multilayered structure having two or three layers, allowing the fabric to serve as comfortable lining for wearers who perform hard exercise that causes heavy liquid sweating

Knitted fabric for the supporter may contain ordinary rubber or rubber-like elastic yarns such as polyurethane-based elastic yarns. It is desirable that supporters that require enhanced stretching performance contain such rubber or rubber-like elastic yarns, as their stretching capability permits the wear to fit well to the body, and enhances easy body movement.

According to the present invention, a wide variety of supporters can be developed by selecting proper materials and fabric structures, such as sports protector including elbow, knee, shank, thigh, and shoulder supporters; medical protectors including elbow, knee, shank, thigh, shoulder, belly, collarbone, and vertebrae supporters; and general cold protectors including elbow, knee, shank, thigh, shoulder, and belly supporters.

Heat-retaining fiber structures according to the invention are also useful for bedding. Fiber having water molecule adsorption/heat release capability to be used in a cloth layer or wadding for bedding of this invention should be hygroscopic, but as the hygroscopicity increases excessively, the fiber will have a chilly feel and less suitable for heat retention. To avoid this, said cloth layer having water molecule adsorption/heat release capability should have a contact thermal sensation factor (qmax) of 0.10W/cm$^2$ or less at its skin contact portions (outside surface).

Bedding of this invention consists of an outer layer of high-density woven fabric of polyester long fiber or cotton; wadding of polyester short fiber with highly hygroscopic silica particulates fixed thereto with a binder; and lining of gigged knit of polyester long fiber with hygroscopic polymer fixed thereto; which are sewed together to produce a coverlet having water molecule adsorption/heat release capability as proposed in the present invention. Sleeping mat, kotatsu coverlets and sleeping bags can be produced by a similar procedure.

Bedding of this invention can be favorably used as bedclothes, kotatsu coverlets and sleeping bags.

For heat-retaining shoes and heat-retaining gloves of the invention, said moisture/heat release control capability is intended to control the heat of vaporization. Said cloth layer having water molecule adsorption/heat release capability releases heat after adsorbing moisture released from the wearer' s body through insensible perspiration, but at the same time evaporates moisture from the cloth to the outside environment while absorbing the heat of vaporization, thus causing a decrease in the net pyrogenic effect for the wearer. A pyrogenic effect that is sensible to the wearer is achieved only by controlling the heat of vaporization.

Such outer material having sensible performance for moisture/heat release control should have a moisture permeability of 12, 000g /m$^2$·24hr or less as measured according to JIS L-1099 (A-1).

However, if said control works to limit the quantity of heat of vaporization to a low level, the moisture release performance will deteriorate, causing increased stuffiness to make the wearer feel unpleasant. To prevent the generation of heat of vaporization while eliminating the stuffiness for the wearer, the moisture permeability of the outer layer having moisture/heat release control capability should be within 3000-12000g/m$^2$·24hr. A lower moisture permeability brings about an increased stuffiness, whereas a higher moisture permeability brings about a larger quantity of heat of vaporization, making the heat release effect unperceivable. The moisture permeability should preferably be in the range of 4,000-12,000 g/m$^2$·24hr, more preferably 6,000-12,000 g/m$^2$·24hr. Useful methods to control the moisture permeability within said range include, but not limited to, moisture-permeating/waterproofing treatment.

Moisture-permeating/waterproofing treatment is carrying out by coating or laminating the foundation cloth with fine porous polyurethane film (by wet coagulation), non-porous moisture-permeable polyurethane film, or fine porous polytetrafluoroethylene film to impart both waterproofness and moisture permeability. The moisture permeability can also be controlled by increasing or decreasing the density of the woven fabric. The level of moisture permeability may be set appropriately after considering the required degree of control of heat of vaporization and required stuffiness for the intended application. Thus, the moisture permeability is set to a higher level for cloth tobe used at high ambient temperatures and high exercise intensity, while it is set to be a low level for cloth to be used at low ambient temperatures and low exercise intensity.

For the invention, fiber that constitutes a cloth layer having water molecule adsorption/heat release capability should be hygroscopic. Practically desirable ones include synthetic fiber in which a hygroscopic polymer or the like is dispersed to increase hygroscopicity, such as highly hygroscopic nylon yarns produced by spinning nylon after incorporating polyvinyl pyrrolidone, and cloth with enhanced water molecule adsorption/heat release capability produced by fixing, in an after processing process etc., a hygroscopic polymer and/or hygroscopic particulates on the surface to improve hygroscopic performance.

It is more desirable to use cloth with further enhanced water molecule adsorption/heat release capability produced by fixing, in an after processing step etc., a hygroscopic polymer and/or hygroscopic particulates on the surface of synthetic fiber whose hygroscopicity has been enhanced by dispersing and incorporating a hygroscopic polymer.

For the present invention, said cloth with at least one side laminated with a synthetic resin film layer to impart

moisture/heat release control performance may be moisture-permeable/waterproof material consisting of cloth with one side coated or laminated with fine porous polyurethane film (by wet coagulation), non-porous hydrophilic polyurethane film, or polytetrafluoroethylene film.

Good moisture-permeable, waterproof heat-retaining shoes and heat-retaining gloves of this invention can be produced by using said moisture-permeable/waterproof material, with an intermediate layer of sponge and/or cloth having an exothermic energy index of 5 or larger, and lining having an exothermic energy index of 5 or larger and a contact thermal sensation factor of at its outer face of 0.1W/$cm^2$ or less. As a matter of fact, the objective of the invention is also achieved by eliminating the intermediate layer while using said moisture-permeable, waterproof material as outer layer, and said lining having an exothermic energy index of 5 or larger and a contact thermal sensation factor of its outer surface of 0.1W/$cm^2$ to produce light shoes.

Although sufficient heat-retaining performance can be achieved in this invention by using only said cloth having water molecule adsorption performance, heat reserving material may be added to permit said cloth to retain generated heat effectively.

Such heat reserving materials include far infrared radiation ceramics produced from inorganic compounds such as alumina, zirconia and magnesia; paraffin wax capable of utilizing latent heat from phase change; and carbon black. Heat reserving material may be added to cloth having moisture/heat release control capability to enhance the heat-retaining effect.

An after processing step to impart water molecule adsorption/heat release capability to cloth may consist of adding a polymerization initiator to a solution of vinyl sulfonic acid and one or more of compounds represented by general formulae [I], [II], [III], applying treatment liquid by such a technique as padding, spraying, kiss roll coater, and slit coater, and polymerization by such a technique as dry heating, wet heating, microwave irradiation, and ultraviolet irradiation, to fix it on the surface of fiber. Vinyl sulfonic acid is low in pH, and if it is used at such a pH, such materials as cotton and nylon will become brittle. Therefore, it is previously neutralized, and used as vinyl sodium sulfonate. Zinc vinyl sulfonate may be used to impart deodorizing capability. Useful vinyl sulfonic acids include 2-acrylamide-2-methylpropane sulphonic acid (AMPS), sodium 2-acrylamide-2-methylpropane sulfonate (AMPS-Na), 2-allyloxy-2-hydroxypropane sulfonic acid, and sodium styrene sulfonate. Two or more of these monomers may be used for this invention. Particularly, AMPS is desirable because of its polymerizing efficiency and water molecule adsorption/heat release capability.

Compounds for this invention as expressed by general formula [I] are:

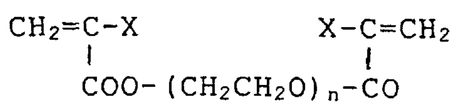

where X is a hydrogen atom or $CH_3$, and n is an integer in the range of 5 to 40, preferably 9 to 23. Sufficient durability cannot be achieved if n is smaller than 5 or larger than 40. For monomer B, n is preferably in the range of 15 to 35 in view of antistatic performance.

Compounds as expressed by general formula [II] are:

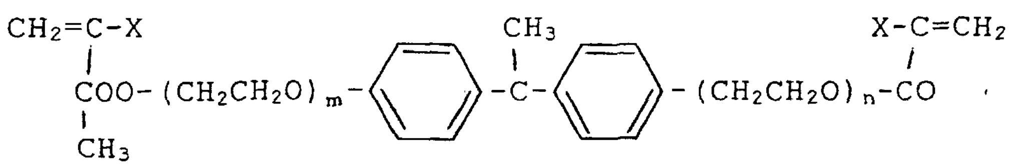

where X is a hydrogen atom or $CH_3$, and m+n is an integer in the range of 5 to 40, preferably 10 to 30. Sufficient durability and antistatic capability cannot be achieved if m+n is smaller than 5 or larger than 40.

Compounds as expressed by general formula [III] are:

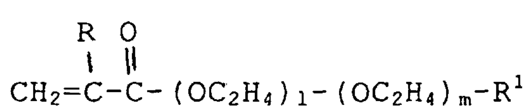

where R is a hydrogen atom or $CH_3$, $R^1$ being Cl, Br, I, $OCH_3$, $OC_2H_5$, or $SCH_3$, and 1+m being an integer in the

range of 5 to 40, with m being preferably an integer of 0 to 9, I being preferably an integer of 10 or larger, and 1+m being preferably 20 to 30 in view of durability.

Monomers shown by the above general formulae [I], [II], [III] can be used singly or in combination. Two or more of them can be used together without problems.

In the above general formulae [I], [II], [III], X may be H or $CH_3$, but it is preferably $CH_3$ for safety purposes.

For this invention, the mixture ratio by weight of vinyl sulfonic acid to one or more of the monomers represented by general formulae [I], [II], [III] is preferably 1:20 to 1:1, more preferably 1:2. If the mixture ratio by weight exceeds 1: 20, the resulting water molecule adsorption/heat release capability tends to be at a low level, while if it is less than 1: 1, crosslinking of the polymer will not be formed adequately, leading to poor durability. In view of antistatic capability, it is desirable that the weight of compounds of general formulae [I], [II], [III] used is larger than that of vinyl sulfonic acid.

For this invention, a polymerization initiator is used for the polymerizing reaction. Useful polymerization initiators include ordinary radical initiators, including inorganic polymerization initiators such as ammonium persulfate, potassium persulfate and hydrogen peroxide, and organic polymerization initiators such as 2,2'-azobis(2-amidinopropane)dihydrochloride, 2,2'-azobis(N,N-dimethyleneisobutylamidine)dihydrochlor ide, and 2-(carbamoylazo)isobuthylonitrile. A water-insoluble polymerization initiator such as benzoyl peroxide, and azobisisobutylonitrile may be used after being emulsified with a surface active agent such as anion and nonion. In view of low cost and easy handling purpose, ammonium persulfate is favorably used. To further improve the polymerization efficiency, a so-called redox initiator, which consists of a peroxide acting as polymerization initiator and a reducing agent, may be used. Said peroxide is, for example, ammonium persulfate or potassium persulfate, and said reducing agent is, for example, a reactant of sodium sulfoxylate with formalin, or hydrosulfite. The content of said polymerization initiator to be used is preferably 0.1-3%, depending on the monomer concentration and treatment conditions to be used.

Various penetrants may be used to increase compatibility with fiber. Such penetrants include alcohols such as isoprophylalcohol; anionic surface active agents such as sodium sodium dodecylbenzenesulfonate and sodium alkylnaphthalene sulphonate; and non-ionic surface active agents such as ethylene oxide addition products of octyl phenol.

Treatment liquid used for this invention basically consists of vinyl sulfonic acid, one or more monomers represented by general formulae [I], [II], or [III], and a polymerization initiator, but finishing agents such as repellent, softening agent, fire retardant, and antibacterial-deodorant agent may be added thereto as required. To accelerate crosslinking, a vinyl monomer having methylol groups, such as N-methylol acrylamide, N-methylol methacrylamide, and N,N-methylene bisacrylamide, may be added thereto to such a degree that the resulting material will not have a heavily coarse or hard feeling.

As required, natural materials are favorably added thereto, such natural materials including cotton, hemp, and tea, extracted from plants; wool, silk, chitin, chitosan, and squalane, extracted from animals; and smectite, extracted from ores. These may be mixed in the treatment liquid for simultaneous treatment, or he above treatment is carried out first, followed by preparing another treatment liquid of natural materials alone, impregnating fiber therewith, and applying dry heat. These natural materials have hygroscopic property, which serves to further increase the heat-retaining effect.

Treatment liquid may be applied to fiber material by using common means . It is desirable to use a vacuum dewatering machine to adjusting the amount to be added.

For synthetic fibers including polyester, nylon, and acryl fibers, treatment liquid may be added at the stage of filature or spinning. When melt spinning is performed to spin POY (partially opriented yarns) into polyester filament, for example, at least one compound selected from the group of a compound as described above; higher hydrocarbon; ester of a polyhydric alcoholwith 3-6 carbon atoms and a fatty acid with 14-18 carbon atoms; aliphatic amide produced by reaction of a fatty acid with 12-17 carbon atoms and an aminoalcohol; and a water soluble silicone compound; is mixed with a polyoxyethylene-based surface active agent to provide a mixed composition, which is added along with a spinning oil agent, followed by dry heat treatment in the subsequent drawing process to allow the compound to adhere strongly to the fiber, whereby imparting water molecule adsorption/heat release capability for increased resistance to washing. In the case of acryl, material is spun by wet spinning, drawn and washed, and a solution of one or more compounds as expressed by general formulae [I], [II] or [III] is applied up to 0.05 to 5 wt%, followed by dry compacting, steaming, and drying to ensure strong adhesion to the fiber, to impart water molecule adsorption/heat release capability with washing resistance as in the case of polyester.

Required capability can also be obtained by depositing highly hygroscopic silica particulates on fiber surface with a binder.

Heat-retaining fiber structures according to the invention may be subjected, at the dyeing stage, to additional treatment processes such as for dustproofing, antibacterial property, odor elimination, deodorization, sweat absorption, water repelling, or ultraviolet absorption, plus additional physical after processing such as calendaring, embossing, wrinkling, gigging, or opal finishing, which are performed depending on characteristics required for final applications.

Examples

The invention is explained in details with reference to examples, but they are not intended for any limitation. Measuring methods

(1) Moisture permeability

Measurement of moisture permeability is carried out according to JIS L-1099 (A-1).

(2) Exothermic energy index

A 3g specimen of about 3.5cm in width is put around the measuring part of an alcohol thermometer or a thermocouple and left to stand for 12 hours or longer under the conditions of 30°C and 30%RH, following by measuring the temperature. Then the humidity is increased at a speed of about 3%/min to achieve the conditions of 30°C and 90%RH, while measuring the temperature at one-minute intervals for four hours . After making the measurements, the integral of increased temperature is calculated to determine the amount of exothermic energy, which is represented by the following expression:

exothermic energy index = exothermic energy of specimen /

exothermic energy of polyester taffeta (cloth for JIS color fastness test).

(3) Contact thermal sensation factor (qmax)

BT-Box is adjusted to 30°C in a room of a room temperature of 20°C and a humidity of 65%RH, and placed (pressure 10g/$cm^2$) on a sufficiently humidified sample, followed by measuring the heat flux per unit area with a temperature difference of 10°C using a Thermolabo II measuring device manufactured by Kato-Tec Co., Ltd.

(4) Pyrogenic effect (Heat-retaining capability improving effect)

A sewed product is worn in a room of a temperature of 5°C and a humidity of 65%RH and, after 75W exercise as measured by an ergometer performed for 15 minutes, the sewed product is taken off and reversed, followed by measuring the temperature on the reverse side with thermal infrared imaging and checking the comfortability of the product.

(5) Water drop absorption time

The test is carried out in accordance with JIS L 1096 "General Woven Fabric Testing Method."

Three test pieces of about 15cm x 15cm are sampled. Each test piece is fixed, with its surface down, to a tabaret or a beaker having a diameter of 10cm or larger in a way that does not produce any extra tension. Distilled water is dropped drop by drop from a height of 5cm, and the water absorption time, which lasts from the start of dropping of water till water droplets on the test piece no more show special reflection, is measured at three appropriate points, followed by calculating the average for the three test pieces.

(6) Bursting strength

The test is carried out in accordance with JIS L 1018 "Knit Goods Testing Method." Five test pieces of 15mm x 15mm are sampled, and each test piece was mounted, with its surface up, on a Mullen burst tester in a normal condition without suffering tension, followed by measuring the bursting strength are calculating the average for the five test pieces .

(7) Flex rigidity measurement by cantilever method

The test is carried out in accordance with JIS L 1018 "Knit Goods Testing Method." Five test pieces of 2cm x 15cm are sampled in both the weft and the warp direction. In a cantilever tester with one end sloped at 45°, the shorter edge at one end of a test piece is adjusted to the scale reference at the sloped edge of the tester, and the test piece is allowed to slide toward the slope. When one end reaches the slope, the position of the other end is read.

The distance (mm) over which the test piece has slid is taken as the flex rigidity. The five measurements taken in both the weft and warp directions are averaged for evaluation. A smaller value means that the material is softer.

(8) Stretchability of knitted fabric The test for stretchability is carried out by the constant stretch rate grab method described in JIS L 1018 "Knit Goods Testing Method." Three test pieces of 10cm x about 15cm are sampled in both the weft and warp directions. A constant stretch rate tension tester with an automatic recorder is used. Grabs with a size of 2.54cm x 2.54 for the outer side and those with a size of 2.54cm x 5.08cm for the reverse side are

set at both upper and lower positions, with 7.6 cm intervals between grabs, and a test piece is fixed to the grabs after removing sagging and tension.

It is then elongated up to a load of 17.7N (1.8Kg) at a stress rate of 10 cm/min, and then the grab intervals are measured. Immediately after this, the load is removed and the test piece is allowed to recover to the original grab intervals of 7.6 cm. Behaviors under such loading-unloading operations are recorded as a load-stretch recovery curve on the recorder (see Fig.1).

Based on the results, the stretchability LA(%) is determined by the following expression, and the average for the three test pieces is calculated for both the weft and warp directions of the knitted fabric:

$$\text{stretchability } LA(\%)=[(L1-L)/L] \times 100,$$

where L is the grab interval (mm) and L1 is the grab interval (mm) when elongated up to 17.7N.

(9) Stretch recovery of knitted fabric

To calculate the stretch recovery LB(%) of the knitted fabric, the residual strain L2(%) is determined from the point where the load reaches zero in said load-stretch-recovery curve drawn by the recorder. The following formula is used to calculate the stretch recovery LB(%), and the average for the three test pieces is determined for both the weft and warp directions of the knitted fabric:

$$\text{stretch recovery } LB(\%)=(L3/L1) \times 100.$$

Example 1

Water repelling treatment was performed for nylon taffeta formed of nylon filament yarns of 77dtex, by using a fluorine-based water repellent. Specifically, the taffeta was immersed in a water-dispersed liquid containing 3% by weight of the Asahi-Guard AG710 water repellent manufactured by Meisei Kagaku Co., Ltd., taken out with a squeeze ratio of 40%, and subjected to dry heat treatment for 30 seconds at 130°C in a heat setter. Then, the taffeta was coated with a polyurethane solution of Prescription 1 having the following composition by using a knife-over-roll coater with a clearance of 200μ, and then subjected to hot-air drying at 80°C to provide nonporous, moisture-permeable, waterproof outer material having a moisture permeability of 4800g/m$^2$·24hr.

| Prescription 1 | |
|---|---|
| Hi-Muren Y-265 (polyether-based polyurethane, with a thickness of 12μ and a moisture-permeability of 6,300g/m$^2$·24hr, manufactured by Dainichi Seika) | 100 parts |
| Rezamin X-100 crosslinking agent (isocyanate-based crosslinking agent), manufactured by Dainich Seika) | 1 part |
| MEK | 25 parts |
| toluene | 25 parts |

Then, treatment liquid of Prescription 2 having the following composition was sprayed, up to a deposit rate by weight of 100%, over a web comprising of a fiber structure with a weight of 80g/m$^2$ formed of 100% polyethylene terephthalate having a single-yarn fiber fineness of 7.2dtex and a fiber length of 64mm, followed by predrying for two minutes at 120°C. Subsequently, heat treatment is performed for one minute at 180°C to produce wadding with silica particulates fixed over fiber surfaces and having an exothermic energy index of 22.

| Prescription 2 | |
|---|---|
| Silica particles | |
| Sylysia 550 (Fuji Silysia Kagaku Co., Ltd.) The silica particles used had an average particle size of 2.7μm and an average specific surface area of 500m$^2$/g. | 60g/l |
| Binder | |
| Silicone-based resin KT7014 (40% solid component) (Takamatsu Yushi Co., Ltd.) | 25g/l |

Further, a gigged cut satin tricot product formed of polyester 83 dtex-24F was immersed in a treatment liquid of Prescription 3 having the following composition, and squeezed by a mangle set at a pickup rate of 80% and dried by a dryer at 120°C for two minutes.

| Prescription 3 | |
|---|---|
| AMPS (2-acrylamide-2-methylpropane sulfonic acid) | 20g/l |
| PEG#1000 dimethacrylate (a brand name: Graset T303, Kyoei) | 40g/l |
| Ammonium persulfate | 2g/l |

Immediately after drying, the material was treated by using a heating steamer at 105°C for five minutes, washed in hot water, and dried. Then, it is set in a dryer at 170°C for one minute to produce lining having an exothermic energy index of 15.

The outer material, wadding and lining described above were used to produce a blouson for evaluation. Results are shown in Table 1.

Example 2

Outer material and lining were produced as in Example 1 except that wadding was not used to produce a blouson for evaluation. Results are shown in Table 1.

Example 3

An adhesive shown in Prescription 4 having the following composition was applied over the coated film of the outer material produced by Example 1 by using a 30-mesh gravure roll, followed by hot drying at 100°C. Then, the lining produced in Example 1 was adhered to the material and, while pressing them together, aged for 24 hours at 40°C to produce moisture-permeable, waterproof finished cloth of a three-layer structure.

| Prescription 4 | |
|---|---|
| Hi-Muren Y-199 (two-liquid type polyether-based polyurethane) manufactured by Dainichi Seika Kogyo Co., Ltd. | 100 parts |
| Colonate HL (isocyanate) manufactured by Nippon polyurethane Kogyo Co., Ltd. | 8 parts |
| Axcel T (crosslink accelerator) manufactured by Dainippon Ink Kagaku Kogyo Co., Ltd. | 2 parts |

The above moisture-permeable, waterproof finished cloth was used to produce a blouson for evaluation. Results are shown in Table 1.

Example 4

Polyester false twist yarns of 83 dtex-72F were used as warp while polyester false twist yarns of 83 dtex-72F and 165dtex-96F were used as weft for the outer material and lining, respectively, and then a water jet loom and a two-pick dobby loom were used to weave and dye a weft double woven fabric consisting of an outer layer of plain weave and a reverse layer of 1/3 twill weave and having, after being finished, a warp density of 170 stitches/in, and a weft density of 90 stitches/in in the outer layer and 45 stitches/in in the reverse layer. Subsequently, it was immersed in a treatment liquid of Prescription 3 by the same procedure as for the finishing of gigged tricot lining in Example 1, and then squeezed with a mangle set at a pickup rate of 80%, followed by drying for two minutes at 120°C by a dryer. Immediately after drying, it is treated for five minutes at 105°C by a heating steamer, washed in hot water and dried. Then, it is set in a dryer for drying for one minute at 170°C to produce a double woven fabric with a dense outer layer and a coarse reverse layer.

The above doubled woven fabric was used to produce a blouson for evaluation. Results are shown in Table 1.

Elsewhere, a plain woven fabric formed only of the above outer weave was produced, and dyed, followed by measuring its moisture permeability, which was found to be 11000g/$m^2$·24hr.

Example 5

Polyethylene terephthalate filament 84dtex-24F woolie finished yarns were used as component yarn A of the reverse layer (skin side) of knitted fabric from four yarn feeders F2, F4, F6, and F8 for knit weave with a total eight

yarn feeders, as shown in the knitting diagram in Fig.2, while polyethylene terephthalate filament 110dtec-72F yarns were used as component yarn B of the outer layer of the knitted fabric from the other four yarn feeders F1, F3, F5, and F7, in order to produce, by using a 22G interlock circular knitting machine, 100% polyethylene terephthalate circular knitted fabric whose reverse layer comprises honeycomb reversible weave.

This knitted fabric was relaxed, refined, dyed by an ordinary dyeing technique for circular knitted fabrics, and dried. Then, the dyed and dried cloth was immersed in a treatment liquid as defined in Prescription 3 having the following composition, squeezed by a mangle set at a pickup rate of 80%, and dried by a dryer at 120°C for two minutes.

Immediately after drying, the cloth was treated by a heating steamer at 105°C for five minutes, washed in hot water, and dried. Then, it was set in a dryer at 170°C for one minute to produce knitted fabric having an exothermic energy index of 11, a contact thermal sensation factor (qmax) of the reverse layer (the skin side) of 0.055, abursting strength of 0.58MPa, a water drop absorption time of one second or shorter, densities of 38 wales/2.54cm and 53 courses/2.54cm, and a weight of 201g/$m^2$.

The knitted fabric was used to produce a long-sleeved T-shirt as sportswear of this invention. Results of its evaluation showed that the shirt was warm and agreeable to the touch, and had a comfortable dry feel during exercise. Results are shown in Table 2.

Example 6

Spun acrylic yarns 1/52were used as component yarn B of the reverse layer (skin side) of knitted fabric from four yarn feeders F2, F4, F6, and F8 for knit weave with a total eight yarn feeders, as shown in the knitting diagram in Fig.2, while nylon filament finished yarns, 78dtec-24F, were used as component yarn A of the outer layer of the knitted fabric from the other four yarn feeders F1, F3, F5, and F7, in order to produce, by using a 22G interlock circular knitting machine, 100% polyethylene terephthalate circular knitted fabric whose reverse layer comprises honeycomb reversible weave.

This knitted fabric was relaxed, refined, dyed by an ordinary dyeing technique for circular knitted fabrics, and dried. Then, the dyed and dried cloth was immersed in a treatment liquid as defined in Prescription 3, squeezed by a mangle set at a pickup rate of 80%, and dried by a dryer at 120°C for two minutes.

Immediately after drying, the cloth was treated by a heating steamer at 105°C for five minutes, washed in hot water, and dried. Then, it was set in a dryer at 170°C for one minute to produce knitted fabric having an exothermic energy index of 9, a contact thermal sensation factor (qmax) of the reverse layer (the skin side) of 0.076, abursting strength of 0.52MPa, a flex rigidity of 13mm as measured by the cantilever method, densities of 36 wales/2.54cm and 48 courses/2.54cm, and a weight of 190g/$m^2$.

The knitted fabric was used to produce underwear of this invention. Results of its evaluation showed that the underwear was warm and flexible to permit easy body movements, proving its high performance. Results are shown in Table 3.

Example 7

56dtex-24F yarns produced by incorporating polyvinyl pyrolidone, a hygroscopic polymer, into nylon were used as front yarn A and back yarn B shown in the knitting diagram of Fig.3 to produce, using a 28G single tricot machine, warp-knitted fabric for 1/3 satin weave.

This knitted fabric was relaxed, refined, dyed by an ordinary dyeing technique for warp-knitted fabrics, and dried, followed by immersing the fabric in a treatment liquid as defined in Prescription 5 having the following composition, squeezing it by a mangle set at a pickup rate of 80%, and drying it by a dryer at 120°C for two minutes.

| Prescription 5 | |
|---|---|
| AMPS (acrylamide methylpropanesulfonic acid) | 20g/l |
| Monomer (shown by general formula [II], X: -$CH_3$, m+n=30) | 50g/l |
| Ammonium persulfate | 2g/l |

Immediately after drying, the material was treated by using a heating steamer at 105°C for five minutes, washed in hot water, and dried. Then, it is set in a dryer at 170°C for one minute. Further, gigging was carried out over the front face, or skin contact side, of the finished cloth.

The resulting knitted fabric had an exothermic energy index of 13, a contact thermal sensation factor (qmax) of the reverse side (skin side) of 0.055, a bursting strength of 0.53MPa, a frictional static charge of 2.1kV, densities of 35 wales/2.54cm and 44 courses/2.54cm, and a weight of 80g/$m^2$.

The knitted fabric was used to produce lining for women's jackets, which was then evaluated. Results showed

that it was flexible to permit easy body movements, proving its high performance. Results are shown in Table 4.

Example 8

Spun acrylic yarns 1/52were used as component yarn B of the reverse layer (skin side) of knitted fabric from four yarn feeders F2, F4, F6, and F8 for knit weave with a total eight yarn feeders, as shown in the knitting diagram in Fig.2, while nylon filament finished yarns, 155dtec-48F, were used as component yarn A of the outer layer of the knitted fabric from the other four yarn feeders F1, F3, F5, and F7, in order to produce, by using a 22G interlock circular knitting machine, 100% polyethylene terephthalate circular knitted fabric whose reverse layer comprises honeycomb reversible weave.

This knitted fabric was relaxed, refined, dyed by an ordinary dyeing technique for circular knitted fabrics, and dried. Then, the dyed and dried cloth was immersed in a treatment liquid as defined in Prescription 3, squeezed by a mangle set at a pickup rate of 80%, and dried by a dryer at 120°C for two minutes.

Immediately after drying, the cloth was treated by a heating steamer at 105°C for five minutes, washed in hot water, and dried. Then, it was set in a dryer at 170°C for one minute to produce knitted fabric having an exothermic energy index of 10, a contact thermal sensation factor (qmax) of the reverse layer (the skin side) of 0.078, a stretchability and stretch recovery in the warp direction of 48% and 72%, respectively, a stretchability and stretch recovery in the weft direction of 65% and 82%, and a bursting strength of 0.54Mpa.

The knitted fabric was used to produce a knee supporter of this invention with the weft of the knitted fabric aligned in the length direction of the supporter, followed by its evaluation. Results showed that the supporter was warm and flexible to permit easy body movements, proving its high performance. Results are shown in Table 5.

Example 9

Treatment liquid of Prescription 2 having the following composition was sprayed, up to a deposit rate by weight of 100%, over a web consisting of a plain-weave outer layer formed of polyethylene terephthalate yarns of 83dtex-24F as both warp and weft with densities of 110 yarns/in and 80 yarns/in in the warp and weft directions, respectively, and a fiber structure of 100% polyethylene terephthalate with a single yarn fiber fineness of 7.2 dtex and a fiber length of 64mm, followed by predrying at 120°C for two minutes. Subsequently, heat treatment is performed at 180°C for one minute to produce wadding with silica particulates fixed over fiber surfaces and having an exothermic energy index of 22.

The silica particles used had an average particle size of 2.7µm and an average specific surface area of 500m$^2$/g. Further, a gigged cut satin tricot product formed of polyethylene terephthalate of 83 dtex-24F was immersed in a treatment liquid of Prescription 3, squeezed by a mangle set at a pickup rate of 80%, and dried by a dryer at 120°C for two minutes. (Prescription 3)

Immediately after drying, the material was treated by using a heating steamer at 105°C for five minutes, washed in hot water, and dried. Then, it is set in a dryer at 170°C for one minute to provide lining with an exothermic energy index of 15. A coverlet was produced from said outer material, wadding and lining produced above, and evaluated. Results are shown in Table 6.

Example 10

Water repelling treatment was performed for nylon taffeta formed of nylon filament yarns of 77dtex, by using a fluorine-based water repellent. Specifically, the taffeta was immersed in a water-dispersed liquid containing 3% by weight of the Asahi-Guard AG710 water repellent manufactured by Meisei Kagaku Co., Ltd., taken out with a squeeze ratio of 40%, subjected to dry heat treatment for 30 seconds at 130°C in a heat setter, and cured at 170°C for one minute. Then, the taffeta was coated with a polyurethane solution of Prescription 1 by using a knife-over-roll coater with a clearance of 200µ, and then subjected to hot-air drying at 80°C to provide nonporous, moisture-permeable, waterproof outer material having a moisture permeability of 4800g/m$^2$·24hr.

Then, the treatment liquid of Prescription 2 was sprayed, up to a deposit rate by weight of 100%, over latex sponge with a thickness of 10mm, followed by predrying at 120°C for two minutes. Subsequently, heat treatment is performed at 160°C for one minute to produce sponge wadding with silica particulates fixed over fiber surfaces and having an exothermic energy index of 20.

The silica particles used had an average particle size of 2.7µm and an average specific surface area of 500m$^2$/g. Further, a gigged cut satin tricot product formed of polyethylene terephthalate of 83 dtex-24F was immersed in a treatment liquid of Prescription 3, squeezed by a mangle set at a pickup rate of 80%, and dried by a dryer at 120°C for two minutes.

Immediately after drying, the material was treated by using a heating steamer at 105°C for five minutes, washed in hot water, and dried. Then, it is set in a dryer at 170°C for one minute to provide lining with an exothermic

energy index of 15. Shoes were produced from said outer material, sponge wadding and lining produced above, along with butadiene rubber prepared elsewhere, and evaluated. Results are shown in Table 7.

Example 11

Water repelling treatment was performed for nylon taffeta formed of nylon filament yarns of 77dtex, by using a fluorine-based water repellent. Specifically, the taffeta was immersed in a water-dispersed liquid containing 3% by weight of the Asahi-Guard AG710 water repellent manufactured by Meisei Kagaku Co., Ltd., taken out with a squeeze ratio of 40%, subjected to dry heat treatment for 30 seconds at 130°C in a heat setter, and cured at 170°C for one minute. Then, the taffeta was coated with a polyurethane solution of Prescription 1 by using a knife-over-roll coater with a clearance of 200μ, and then subjected to hot-air drying at 80°C to provide nonporous, moisture-permeable, waterproof outer material having a moisture permeability of 4800g/$m^2$·24hr.

Then, treatment liquid of Prescription 2 was sprayed, up to a deposit rate by weight of 100%, over a web comprising of a fiber structure with a weight of 80g/$m^2$ formed of 100% polyethylene terephthalate having a single-yarn fiber fineness of 7.2dtex and a fiber length of 64mm, followed by predrying for two minutes at 120°C. Subsequently, heat treatment is performed for one minute at 180°C to produce wadding with silica particulates fixed over fiber surfaces and having an exothermic energy index of 22.

In addition, a gigged cut satin tricot product formed of polyethylene terephthalate of 83dtex-24F was immersed in a treatment liquid of Prescription 3, squeeze by a mangle, and dried at 120°C for two minutes.

Immediately after drying, the material was treated by using a heating steamer at 105°C for five minutes, washed in hot water, and dried. Then, it is set in a dryer at 170°C for one minute to provide lining with an exothermic energy index of 15. Gloves were produced from said outer material, wadding and lining produced above, and evaluated. Results are shown in Table 8.

Example 12

The cloth produced in Example 5 was treated in a similar way to that described in Example 5, immersed in a treatment liquid of Prescription 6, squeezed by a mangle set at a pickup rate of 80%, and dried at 150°C for two minutes.

| Prescription 6 | |
|---|---|
| Infrared radiation ceramics (zirconia) particulates | 30g/l |
| Binder (silicone-based resin) KT7014 (40% solid content) manufactured by Takamatsu Jushi Co., Ltd. | 60g/l |

The knitted fabric was used to produce a long-sleeved T-shirt as sportswear of this invention. Results of its evaluation showed that the shirt was warm and agreeable to the touch, and had a comfortable dry feel during exercise. Results are shown in Table 2.

Example 13

A compound of general formula III (R: CH3, $R^1$: OCH3, 1: 23, m: 0) was deposited, up to 2 wt%, on acrylic fiber produced by wet spinning, drawing and washing, and then firmly fixed to the fiber by carrying out drying, compacting, steaming and drying to form acrylic staple of 2.2 dtex, from which a 1/60 spun acrylic yarn having water molecule adsorption/heat release capability was produced. The spun yarn was used as outer-side component yarn B in Example 8, and dyed in a similar way. A similar knee supporter was produced and evaluated, and result showed that the supporter was warm and flexible to permit easy body movements, proving its high performance. Results are shown in Table 5.

Comparative example 1

A blouson was produced from outer material as produced in Example 1, wadding prepared by carrying out the same procedure as in Example 1 except that silica particles were not used in processing the wadding, and taffeta lining formed of cupra with warps of 83dtex and wefts of 116dtex, and evaluated. Results are shown in Table 1.

Comparative example 2

A blouson was produced from outer material as produced in Example 1 and taffeta lining formed of cupra used in Comparative example 1, and evaluated. Results are shown in Table 1.

Comparative example 3

A three-layer moisture-permeable waterproof product was produced from outer material as produced in Example 1 and gigged tricot lining prepared by carrying out the same procedure as in Example 3 except that the processing procedures described in Example 1 was not performed, and evaluated. Results are shown in Table 1.
The above moisture-permeable waterproof product was used to produce a blouson, which was then evaluated. Results are shown in Table 1.

Comparative example 4

A blouson was produced from weft double woven fabric prepared by carrying out the same procedure as in Example 4 except that the processing procedure of Prescription 3 was not performed. Results are shown in Table 1.

Comparative example 5

A circular knitted fabric formed of 100% polyethylene terephthalate similar to that produced in Example 5 was relaxed, refined, dyed by an ordinary dyeing method for circular knitted fabrics, dried, and finished by setting. The knitted fabric was free of gigging and processing according to Prescription 5 as in Example 5.
The resulting knitted fabric had an exothermic energy index of 1, a contact thermal sensation factor (qmax) of the reverse side (skin contact side) of 0.134, a water drop absorption time of 6.1 seconds, a bursting strength 0.51Mpa, densities of 38 wales/2.54cm and 50 courses/2.54cm, and a weight of 195g/$m^2$.
The knitted fabric was used to produce a long-sleeved T-shirt, which was the evaluated. Results showed that the shirt was not adequately warm, failed to have a comfortable dry feel during exercise, and was not warm, indicating that it was not suitable as sportswear. Results are shown in Table 2.

Comparative example 6

Interlock weave of polyethylene terephthalate filament yarns of 83dtex-36F was used to produce, by a 22G interlock circular knitting machine, 100% polyethylene terephthalate circular knitted fabric whose outer and reverse sides are flat.
The fabric was relaxed, refined, dyed by an ordinary dyeing method for circular knitted fabrics, dried, and finished by setting. The knitted fabric was free of gigging and processing according to Prescription 3 as in Example 6.
The resulting knitted fabric had an exothermic energy index of 1, a contact thermal sensation factor (qmax) of the reverse side (skin contact side) of 0.141, a bursting strength 0.23Mpa, a flex rigidity as 4mm as measured by the cantilever method, densities of 38 wales/2.54cm and 50 courses/2.54cm, and a weight of 118g/$m^2$.
The knitted fabric was used to produce underwear as in Example 6, which was then evaluated. Results show that it tended to cling to the body to impede easy movements, was not very warm, or rather chilly, indicating that it was not suitable as underwear. Further, it was easy to break and inferior in mechanical strength. Results are shown in Table 3.

Comparative example 7

Half weave of polyethylene terephthalate yarns of 56dtex-36F was used to produce, by a 28G single tricot machine, 100% polyeste warp-knitted fabric whose outer and reverse sides are flat.
The fabric was relaxed, refined, dyed by an ordinary dyeing method for circular knitted fabrics, dried, and finished by setting. The knitted fabric was free of gigging and processing according to Prescription 5 as in Example 7.
The resulting knitted fabric had an exothermic energy index of 1, a contact thermal sensation factor (qmax) of the reverse side (skin contact side) of 0.148, a bursting strength 0.55Mpa, a frictional static charge of 9.4 kV, densities of 35 wales/2.54cm and 45 courses/2.54cm, and a weight of 76g/$m^2$.
The knitted fabric was used to produce lining as in Example 7, which was then evaluated. Results show that it was not warm, or rather chilly, and it tended to cling to the body to impede easy movements, indicating that it was not suitable as lining. Results are shown in Table 4.

Comparative example 8

Interlock weave of polyethylene terephthalate filament yarns of 83dtex-36F was used to produce, by a 20G interlock circular knitting machine, 100% polyethylene terephthalate circular knitted fabric whose outer and reverse sides are flat

The fabric was relaxed, refined, dyed by an ordinary dyeing method for circular knitted fabrics, dried, and finished by setting. The knitted fabric was free of gigging and processing according to Prescription 3 as in Example 8.

Comparative example 9

The outer material used in Example 9 was used as both outer layer and lining while wadding as in Example 10 processed as in Example 9 without using silica particles was used, in order to produce a coverlet, which was then evaluated. Results are shown in Table 6.

Comparative example 10

The outer material produced in Example 11 was used while the 10mm thick latex sponge in Example 11 was used as intermediate layer without being subjected to the processing of Example 10, along with a satin tricot (without gigging) of polyethylene terephthalate of 83dtex-24F, in order to produce shoes as in Example 11, which were then evaluated. Results are shown in Table 8.

Comparative example 11

The outer material produced in Example 11 was used along with wadding produced as in Example 11 and processed as in Example 1 without using silica particles, and plain-weave lining with densities of 110 yarns/in and 80 yarns/in in the warp and weft directions, respectively, produced by using polyethylene terephthalate 83dtex-24F as both warp and weft, in order to produce gloves, which were then evaluated. Results are shown in Table 8.

Industrial applicability

A heat-retaining fiber structure having water molecule adsorption capability to realize high heat-retaining effect can be provided by laminating a cloth layer having moisture/heat release control capability with another cloth layer having water molecule adsorption capability and by making use of the heat-retaining structure according to the invention which is low in contact thermal sensation factor in the skin contact side.

Table 1

| | Moisture Permeability of outer material | Exothermic energy index | Contact thermal sensation factor (qmax) of reverse surface | Pyrogenic effect Temperature of reverse side after wearing | Feeling of wearer |
|---|---|---|---|---|---|
| | (g/m² · 24hr) | | (W/cm²) | (℃) | |
| Example 1 | 4800 | Wadding 22, lining 15 | 0.04 | 22.5 | Warm |
| Example 2 | 4800 | Lining 15 | 0.04 | 20.8 | Relatively warm |
| Example 3 | 4800 | Lining 15 | 0.04 | 20.2 | Relatively warm |
| Example 4 | 11000 | Whole fabric 8 | 0.08 | 19.2 | Relatively warm |
| Comparative Example 1 | 4800 | Wadding 2, lining 9 | 0.15 | 18.5 | Chilly when lining touches the skin while putting on or taking of |
| Comparative Example 2 | 4800 | Lining 9 | 0.15 | 17.8 | Chilly when lining touches the skin while putting on or taking of |
| Comparative Example 3 | 4800 | Lining 1 | 0.04 | 15.0 | Chilly |
| Comparative Example 4 | 11000 | Lining 1 | 0.08 | 14.5 | Chilly |

Table 2

| | Exothermic energy index | Contact thermal sensation factor (qmax) of reverse side | Bursting strength | Water drop absorption time | Pyrogenic effect Temperature of reverse side after wearing | Feeling of wearer | | |
|---|---|---|---|---|---|---|---|---|
| | | (W/cm²) | (Mpa) | (sec) | (℃) | Warmth while wearing | Touch | Dry feel during exercise |
| Example 5 | 11 | 0.055 | 0.58 | 1 or less | 19.4 | ◎ | ○ | ◎ |
| Example 12 | 15 | 0.047 | 0.52 | 2.1 | 22.7 | ◎ | ◎ | ○ |
| Comparative Example 5 | 1 | 0.134 | 0.51 | 6.1 | 17.5 | △ | ○ | △ |

Table 3

| | Exothermic energy index | Contact thermal sensation factor (qmax) of reverse side | Bursting strength | Flex rigidity | Pyrogenic effect Temperature of reverse side after wearing | Feeling of wearer |
|---|---|---|---|---|---|---|
| | | ($W/cm^2$) | (Mpa) | (mm) | (℃) | |
| Example 6 | 9 | 0.076 | 0.52 | 13 | 19.8 | Warm |
| Comparative Example 6 | 1 | 0.141 | 0.23 | 4 | 17.3 | Not warm, rather chilly |

Table 4 Lining

| | Exothermic energy index | Contact thermal sensation factor (qmax) of reverse side | Bursting strength | Frictional static charge | Pyrogenic effect Temperature of reverse side after wearing | Feeling of wearer |
|---|---|---|---|---|---|---|
| | | ($W/cm^2$) | (Mpa) | (kV) | (℃) | |
| Example 7 | 13 | 0.055 | 0.53 | 2.1 | 19.8 | Warm |
| Comparative Example 7 | 1 | 0.148 | 0.55 | 9.4 | 16.9 | Not warm, rather chilly |

Table 5 Supporter

| | Exothermic energy index | Contact thermal sensation factor (qmax) of reverse side | Bursting strength | Stretchability | | Stretch recovery | | Pyrogenic effect | Feeling of wearer |
|---|---|---|---|---|---|---|---|---|---|
| | | | | Warp | Weft | Warp | Weft | Temperature of reverse side after wearing | |
| | | ($W/cm^2$) | (Mpa) | (%) | | (%) | | (℃) | |
| Example 8 | 10 | 0.078 | 0.54 | 48 | 65 | 72 | 82 | 20.2 | Warm, flexible |
| Example 13 | 15 | 0.080 | 0.50 | 77 | 90 | 88 | 85 | 22.3 | Warm, flexible |
| Comparative Example 8 | 1 | 0.147 | 0.19 | 38 | 47 | 70 | 55 | 16.9 | Not warm, inflexible |

Table 6 Bedding

| | Moisture permeability of outer material | Exothermic energy index | Contact thermal sensation factor (qmax) of reverse surface | Pyrogenic effect | Feeling of wearer |
|---|---|---|---|---|---|
| | | | | Temperature of reverse side after wearing | |
| | ($g/m^2 \cdot 24hr$) | | ($W/cm^2$) | (℃) | |
| Example 9 | 11500 | Wadding 22, lining 15 | 0.04 | 30.3 | Warm |
| Comparative Example 9 | 11500 | Wadding 1, lining 1 | 0.12 | 27.4 | Chilly |

Table 7 Shoes

| | Moisture permeability of outer material | Exothermic energy index | Contact thermal sensation factor (qmax) of reverse surface | Pyrogenic effect<br>Temperature of reverse side after wearing | Feeling of wearer |
|---|---|---|---|---|---|
| | $(g/m^2 \cdot 24hr)$ | | $(W/cm^2)$ | (℃) | |
| Example 10 | 4800 | Sponge 20, lining 15 | 0.04 | 26 | Warm |
| Comparative Example 10 | 4800 | Sponge 1, lining 11 | 0.12 | 21 | Chilly |

Table 8 Gloves

| | Moisture permeability of outer material | Exothermic energy index | Contact thermal sensation factor (qmax) of reverse surface | Pyrogenic effect<br>Temperature of reverse side after wearing | Feeling of wearer |
|---|---|---|---|---|---|
| | $(g/m^2 \cdot 24hr)$ | | $(W/cm^2)$ | (℃) | |
| Example 11 | 4800 | Wadding 22, lining 15 | 0.04 | 32 | Warm |
| Comparative Example 11 | 4800 | Wadding 1, lining 1 | 0.12 | 26 | Chilly |

## Claims

1. Aheat-retaining fiber structure comprising a water molecule adsorbing/heat releasing cloth layer having an exothermic energy index of 5 or larger and a contact thermal sensation factor (qmax) of $0.1W/cm^2$ or less.

2. A heat-retaining fiber structure according to Claim 1 comprising a moisture/heat release controlling cloth layer with a moisture permeability of $3000\text{-}12000g/m^2 \cdot 24hr$.

3. A heat-retaining fiber structure according to Claim 2, wherein said moisture/heat release controlling cloth layer constitutes the outer layer while said water molecule adsorbing/heat releasing cloth layer constitutes the lining.

4. A heat-retaining fiber structure according to Claim 3, comprising an intermediate layer with an exothermic energy index of 5 or larger.

5. A heat-retaining fiber structure according to Claim 2, comprising double woven fabric that consists of a dense moisture/heat release controlling cloth layer and a coarse water molecule adsorbing/heat releasing cloth layer.

6. A heat-retaining structure according to Claim 1, wherein said water molecule adsorbing/heat releasing cloth layer comprises knitted fabric with a bursting strength of 0.2MPa or more and a frictional static charge of 5kV or lower.

7. A heat-retaining structure according to Claim 6, wherein said knitted fabric has densities of 24-85 wales/2.54cm and 28-130course/2.5cm, and a weight of $60\text{-}190g/m^2$.

8. A heat-retaining structure according to Claim 1, wherein said water molecule adsorbing/heat releasing cloth layer comprises fiber with a hygroscopic polymer and/or hygroscopic particulates fixed over its surface.

9. A heat-retaining structure according to Claim 1, wherein said water molecule adsorbing/heat releasing cloth layer contains heat reserving material.

10. A heat-retaining structure according to Claim 8, wherein said hygroscopic polymer consists mainly of a mixture of vinyl sulfonic acid and one or two vinyl monomers selected from the group consisting of compounds represented by the following general formula [I]:

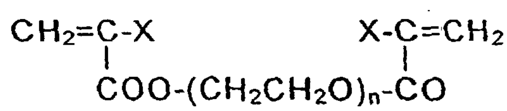

where X is a hydrogen atom or $CH_3$, and n is an integer of 5 to 40,
And/or those representedby the following general formula [II]:

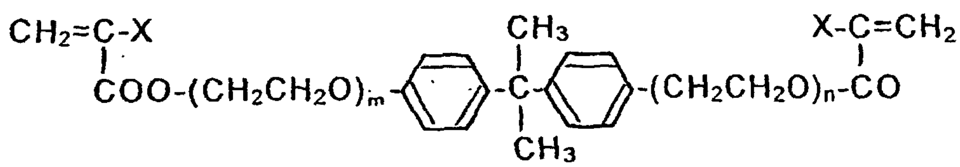

where R is a hydrogen atom or $CH_3$ , and m+n is an integer of 10 to 30,
And/or those represented by the following general formula [III] :

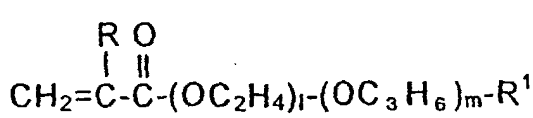

where R is a hydrogen atom or $CH_3$, $R^1$ being Cl, Br, I, $OCH_3$, $OC_2H_5$ or $SCH_3$, m being an integer of 0 to 9, and

1 being an integer of 10 or higher.

**11.** A heat-retaining structure according to Claim 8, wherein said hygroscopic particulates are silica particulates.

**12.** Sportswear comprising a heat-retaining fiber structure according to Claim 1 that is constituted of knitted fabric with a water drop absorption time of 5 seconds or shorter and a bursting strength of 0.29Mpa or more.

**13.** Sportswear according to Claim 12, wherein said knitted fabric has densities of 22-82 wales/2.54cm and 24-130 courses/2.54cm, and a weight of 80-330g/$m^2$.

**14.** Underwear comprising a heat-retaining structure according to Claim 1 that is constituted of knitted fabric with a flex rigidity of 5-30mm as measured by the cantilever method and a bursting strength of 0.25MPa or more.

**15.** Underwear according to Claim 9, wherein said knitted fabric has densities of 22-85 wales/2.54cm and 24-138 courses/2.54cm, and a weight of 80-300g/$m^2$.

**16.** A supporter comprising knitted fabric that is constituted of a heat-retaining fiber structure according to Claim 1 with a stretchability of 50% or higher and a stretch recovery of 60% or higher in either warp or weft direction, and a bursting strength of 0.29MPa or more.

**17.** Bedding comprising a heat-retaining structure according to Claim 3.

**18.** Bedding comprising a heat-retaining structure according to Claim 4.

**19.** Bedding according to Claim 18, wherein said water molecule adsorbing/heat releasing layer and said wadding comprise fiber with a hygroscopic polymer and/or hygroscopic particulates fixed over its surface.

**20.** A heat-retaining shoe comprising a heat-retaining fiber structure according to Claim 1 and a moisture/heat release controlling layer with a moisture permeability of 12000g/$m^2$·24hr or less.

**21.** A heat-retaining glove comprising a heat-retaining structure according to Claim 3.

Fig. 1

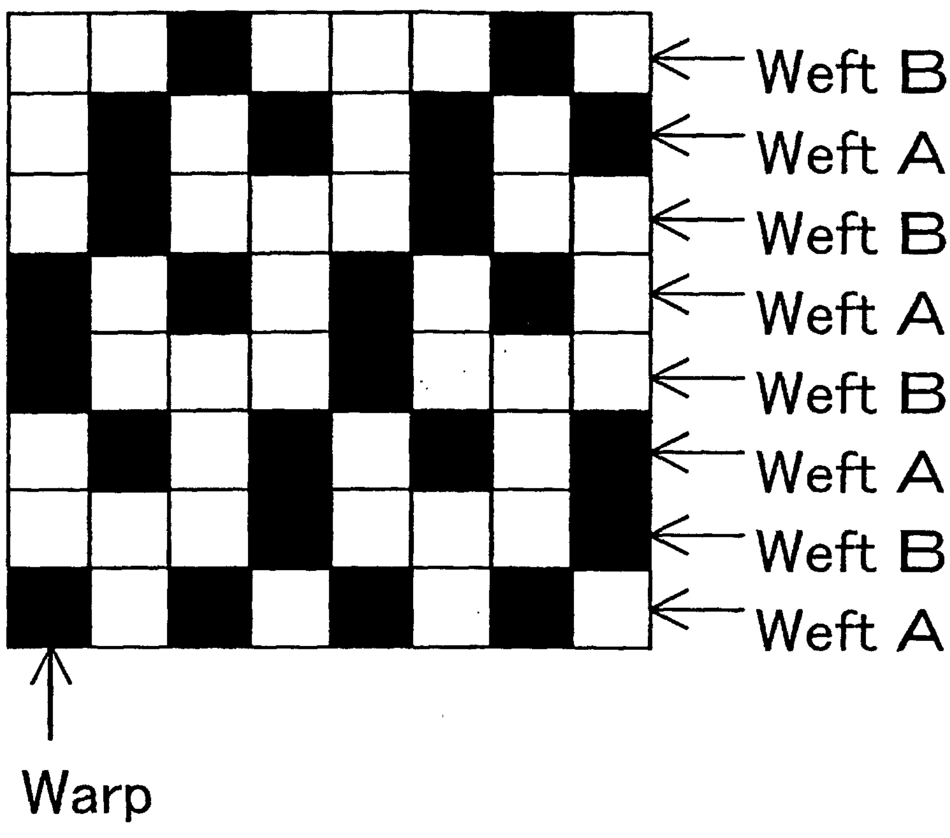

Fig. 2

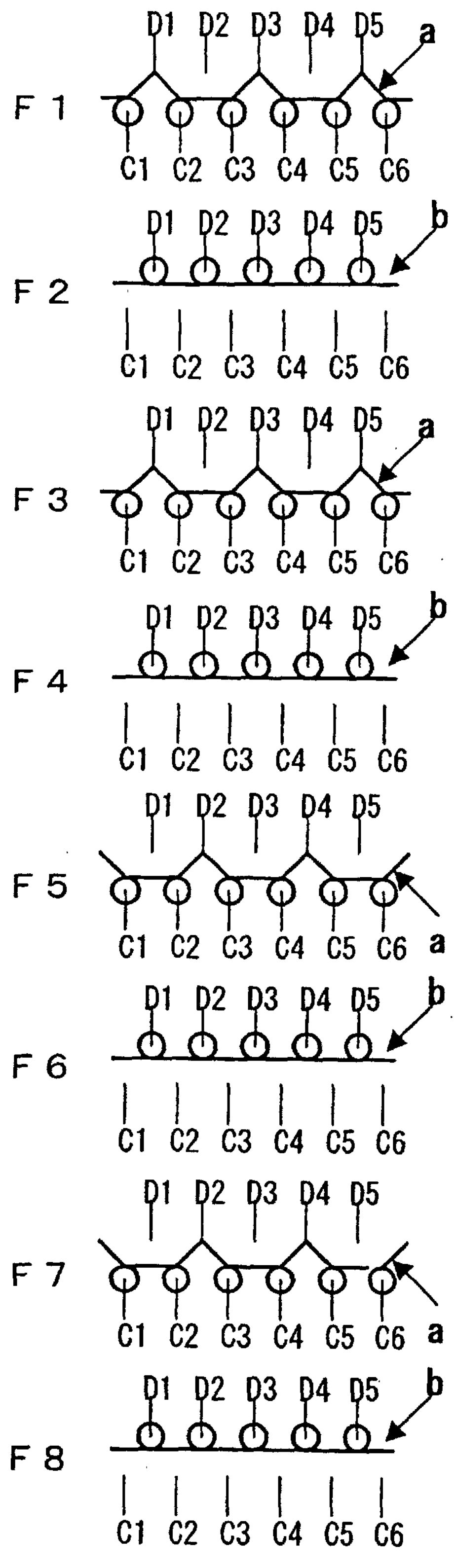
D1 D2 D3 D4 D5 a
F 1
C1 C2 C3 C4 C5 C6
D1 D2 D3 D4 D5 b
F 2
C1 C2 C3 C4 C5 C6
D1 D2 D3 D4 D5 a
F 3
C1 C2 C3 C4 C5 C6
D1 D2 D3 D4 D5 b
F 4
C1 C2 C3 C4 C5 C6
D1 D2 D3 D4 D5
F 5
C1 C2 C3 C4 C5 C6 a
D1 D2 D3 D4 D5 b
F 6
C1 C2 C3 C4 C5 C6
D1 D2 D3 D4 D5
F 7
C1 C2 C3 C4 C5 C6 a
D1 D2 D3 D4 D5 b
F 8
C1 C2 C3 C4 C5 C6

Fig. 3

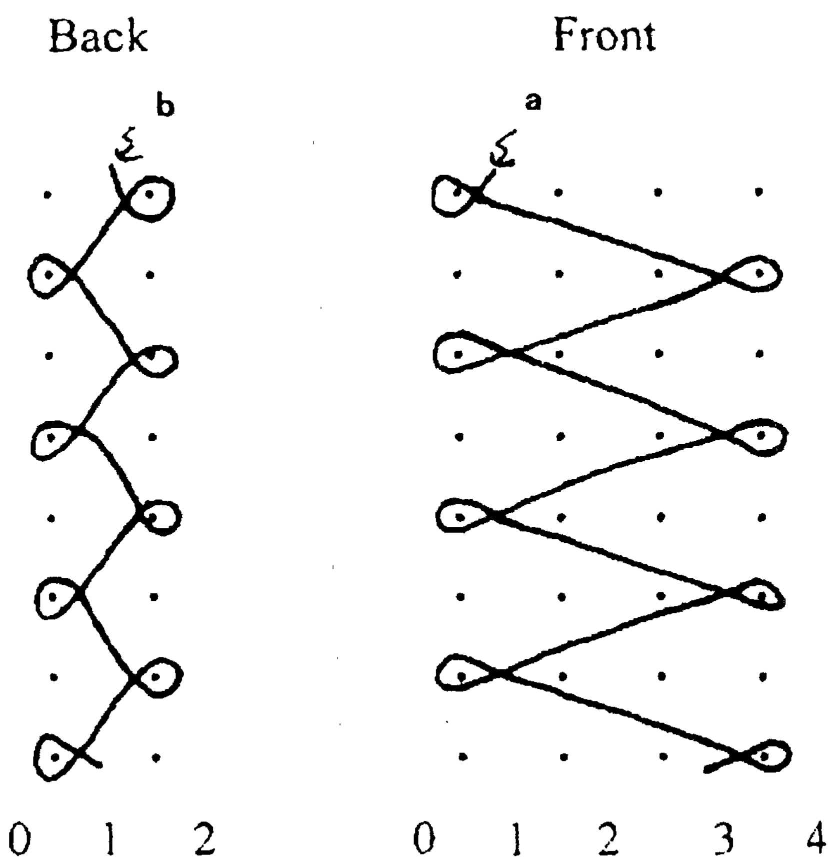

# Fig. 4

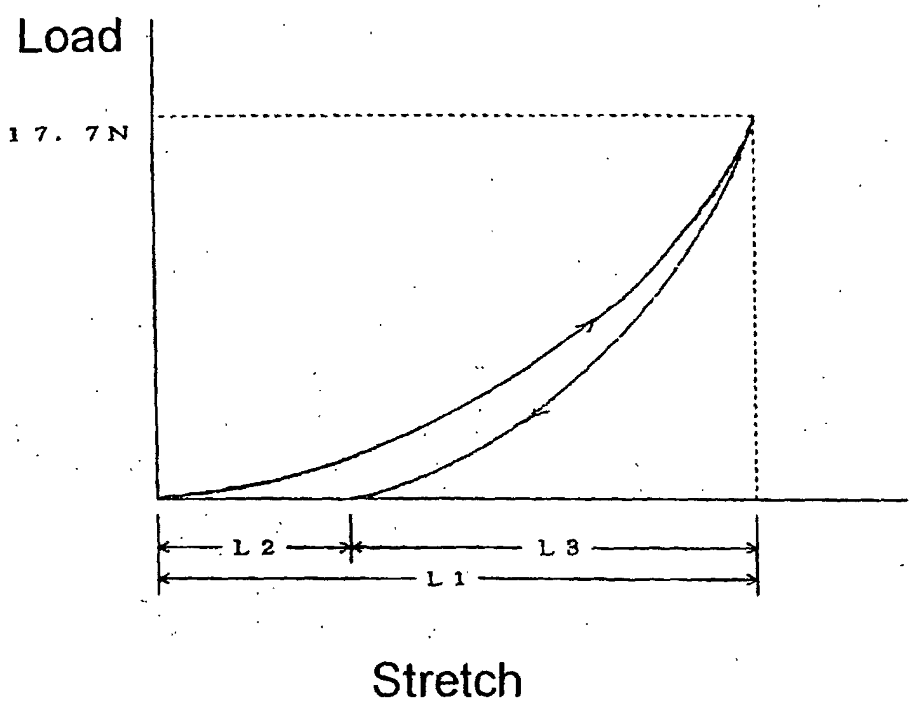

## INTERNATIONAL SEARCH REPORT

International application No.
PCT/JP01/08377

**A. CLASSIFICATION OF SUBJECT MATTER**
Int.Cl[7] B32B5/26, D03D11/00, D04B21/14, A41D31/00, A47C27/12, A43B1/00

According to International Patent Classification (IPC) or to both national classification and IPC

**B. FIELDS SEARCHED**

Minimum documentation searched (classification system followed by classification symbols)
Int.Cl[7] B32B1/00-35/00, A41D31/00-31/02, A41B17/00, D03D1/00-27/18, D04B1/00-21/20, D06M11/00-14/36

Documentation searched other than minimum documentation to the extent that such documents are included in the fields searched
Jitsuyo Shinan Koho 1926-1996 Toroku Jitsuyo Shinan Koho 1994-2001
Kokai Jitsuyo Shinan Koho 1971-2001 Jitsuyo Shinan Toroku Koho 1996-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | US 6046119 A (Toyo Boseki Kabushiki Kaisha), 04 April, 2000 (04.04.00), & EP 933467 A2 & JP 11-247069 & JP 11-279953 A & JP 2000-129574 A & JP 2000-126566 A & JP 2000-199180 A | 1-21 |
| Y | JP 9-31796 A (Toyobo Co., Ltd.), 04 February, 1997 (04.02.97), (Family: none) | 1-21 |
| Y | JP 9-41244 A (Unitika Ltd.), 10 February, 1997 (10.02.97), (Family: none) | 1-21 |
| Y | JP 9-256278 A (Toray Industries, Inc.), 30 September, 1997 (30.09.97), (Family: none) | 10 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 December, 2001 (21.12.01) | 15 January, 2002 (15.01.02) |
| Name and mailing address of the ISA/ Japanese Patent Office | Authorized officer |
| Facsimile No. | Telephone No. |

Form PCT/ISA/210 (second sheet) (July 1992)